# FASCICULE DE BREVET EUROPEEN

(11) **EP 0 796 889 B1**
(45) Date de publication et mention de la délivrance du brevet: **27.10.1999**
(21) Numéro de dépôt: 97200732.2
(22) Date de dépôt: 12.03.1997
(51) Int. Cl.: C08K 5/098, C08L 27/16

(54) **Compositions de polymères du fluorure de vinylidène stabilisés à la chaleur**
Thermostabilisierte Zusammensetzungen von Vinylidenfluorid-Polymeren
Heat-stabilised compositions of vinylidenfluoride polymers

(30) Priorité: 22.03.1996 BE 9600257
(43) Date de publication de la demande: 24.09.1997
(73) Titulaire: SOLVAY (Société Anonyme), 1050 Bruxelles (BE)
(72) Inventeur: Bromont, Valérie, 34000 Montpellier (FR); Robin, Jean-Jacques, 34830 Clapiers (FR); Hannecart, Etienne, 3080 Tervuren (BE)
(74) Mandataire: Eischen, Roland

(56) Documents cités:
- EP-A- 0 013 839
- US-A- 2 560 160
- US-A- 5 373 062
- DATABASE WPI Week 6800 Derwent Publications Ltd., London, GB; AN 68-74005p XP002024952 & JP 41 019 821 B (NISSAN CHEM. IND.)

## Description

La présente invention concerne des compositions de polymères du fluorure de vinylidène présentant une stabilité thermique améliorée. Elle concerne plus particulièrement de telles compositions contenant un carboxylate de bismuth à titre de stabilisant thermique.

Les polymères du fluorure de vinylidène, homopolymères et copolymères thermoplastiques, constituent des polymères bien connus présentant un ensemble de propriétés intéressantes et, notamment, une inertie chimique et une résistance aux rayons ultraviolets élevées, ainsi qu'une excellente résistance mécanique. Ces polymères connaissent dès lors de nombreuses applications dans des domaines, tels que par exemple dans l'industrie chimique, qui sont particulièrement exigeants en matière de résistance à la corrosion. En outre, ces polymères présentent une excellente stabilité thermique intrinsèque, de sorte qu'ils sont le plus souvent mis en oeuvre en l'absence de tout stabilisant thermique.

Néanmoins dans des applications mettant en oeuvre ces polymères en couche très épaisse, par exemple de l'ordre de plusieurs dizaines de mm, une dégradation thermique peut apparaître au coeur de la matière par suite des conditions thermiques sévères auxquelles elle est soumise pendant le façonnage de pièces épaisses. De même, des problèmes de stabilité thermique se font jour lorsque l'on façonne en fondu des polymères du fluorure de vinylidène de très hauts poids moléculaires (par exemple pour le façonnage d'articles exigeant une tenue mécanique très élevée) et/ou des copolymères du fluorure de vinylidène dont la stabilité thermique intrinsèque est inférieure à celle de l'homopolymère. Il s'avère donc actuellement souhaitable de disposer de stabilisants thermiques efficaces pour les polymères du fluorure de vinylidène.

Pour la stabilisation thermique (indispensable) des polymères chlorés, tels que les polymères du chlorure de vinyle, on a déjà proposé une multitude de stabilisants thermiques très divers. En pratique, il s'agit le plus souvent de sels de plomb, de calcium et/ou de zinc, de baryum et/ou de cadmium ou encore d'organoétains et de thioétains.

Néanmoins, dans le brevet CH-A-275 161 du 20 avril 1948, on décrit la stabilisation thermique des polymères du chlorure de vinyle et du chlorure de vinylidène à l'intervention de sels de bismuth d'acides organiques très divers, tels que par exemple, le formiate, le maléate, le laurate et le stéarate de bismuth, la préférence étant donnée aux sels de bismuth d'acides gras ayant au moins 12 atomes de carbone.

Dans la demande de brevet JP-A- 66/19821 du 30 août 1963, on préconise la stabilisation thermique des polymères du polychlorure de vinyle à l'intervention de sels de bismuth d'acides monocarboxyliques en C6 à C22, tels que notamment le stéarate et le salicylate de bismuth. Avantageusement, ces sels de bismuth sont mis en oeuvre conjointement avec des stabilisants thermiques, tels que des sels de cadmium, de baryum, de zinc ou de plomb.

La présente invention vise à procurer des stabilisants thermiques efficaces pour les polymères du fluorure de vinylidène.

A cet effet, l'invention concerne des compositions de polymères du fluorure de vinylidène stabilisés à la chaleur à l'intervention d'une quantité efficace de carboxylate de bismuth, caractérisées en ce que le carboxylate de bismuth est choisi parmi le succinate, l'acrylate et le téréphtalate de bismuth et leurs mélanges.

D'excellents résultats sont obtenus avec le succinate et l'acrylate et leurs mélanges. Un carboxylate de bismuth tout particulièrement préféré est le succinate.

Un aspect surprenant de la présente invention réside dans le fait que des carboxylates de bismuth décrits comme étant aptes à contribuer efficacement à la stabilisation thermique des polymères chlorés, et par ailleurs similaires aux carboxylates de bismuth mis en oeuvre dans les compositions selon l'invention, s'avèrent inefficaces pour stabiliser les polymères du fluorure de vinylidène. Par ailleurs, l'efficacité des stabilisants thermiques selon l'invention est telle qu'ils permettent jusqu'à la stabilisation-décoloration de polymères du fluorure de vinylidène usagés et thermiquement dégradés.

Par quantité efficace de carboxylate de bismuth, on entend désigner aux fins de la présente invention une quantité suffisante pour améliorer la stabilité thermique, c'est-à-dire pour empêcher la coloration des compositions ou, selon le cas, pour atténuer la coloration des compositions (dans le cas de la stabilisation de polymères usagés déjà dégradés) lorsque celles-ci sont soumises à des températures supérieures à la température de fusion des polymères du fluorure de vinylidène et suffisantes pour pouvoir les transformer en articles façonnés. Cette quantité n'est pas particulièrement critique et dépend, notamment, de la nature, du poids moléculaire, ainsi que le cas échéant de l'étendue de la dégradation thermique des polymères du fluorure de vinylidène que l'on souhaite stabiliser. Pour fixer les idées, le carboxylate de bismuth est généralement mis en oeuvre à raison d'au moins 0,05 partie en poids, le plus souvent, au moins 0,1 partie en poids et plus particulièrement encore au moins 0,3 partie en poids pour 100 parties en poids de polymère du fluorure de vinylidène. En général, la teneur en carboxylate de bismuth ne dépasse pas 5 parties en poids; le plus souvent elle ne dépasse pas 3 parties en poids et plus particulièrement encore 1,5 partie en poids pour 100 parties en poids de polymère du fluorure de vinylidène.

La fabrication des carboxylates de bismuth mis en oeuvre dans les compositions selon l'invention ne revêt aucun caractère critique. Ceux-ci peuvent donc être fabriqués de toute manière appropriée. On peut, par exemple, les fabriquer par voie humide par mise en réaction, dans l'eau à température ambiante, de quantités stoechiométriques d'hydroxyde de bismuth et d'acide carboxylique (acides succinique, acrylique ou téréphtalique ou leurs mélanges), suivie d'une filtration du sel de bismuth. On peut également les fabriquer par voie sèche, par exemple, par malaxage- broyage à sec, pendant quelques minutes, de quantités appropriées de trioxyde de bismuth et de l'acide carboxylique (mécanochimie), suivi d'un recuit du milieu réactionnel pour compléter la réaction

Le carboxylate de bismuth peut être mis en oeuvre sous n'importe quelle forme, poudre ou dispersion aqueuse, par exemple. Cependant, pour des raisons de commodité, on préfère le mettre en oeuvre sous la forme d'une poudre. Dans ce cas, il est avantageux d'utiliser des poudres dont les particules présentent un diamètre moyen inférieur à environ 100 µm. De préférence, le diamètre moyen des particules de carboxylate de bismuth est compris entre environ 0,1 et 30 µm.

En plus du carboxylate de bismuth, les compositions selon l'invention peuvent contenir les additifs usuels des polymères du fluorure de vinylidène, tels que des agents lubrifiants, des pigments, des additifs réduisant l'émission de fumées lors de la combustion (agents "fumicides") etc. En général, les compositions selon l'invention ne contiennent pas d'autre stabilisant thermique que le carboxylate de bismuth.

Par polymère du fluorure de vinylidène, on entend désigner aux fins de la présente invention aussi bien les homopolymères du fluorure de vinylidène que les copolymères thermoplastiques du fluorure de vinylidène et de comonomères éthyléniquement insaturés, avantageusement fluorés, contenant au moins environ 75% en poids d'unités monomériques dérivées du fluorure de vinylidène. Avantageusement, lesdits copolymères thermoplastiques présentent une température de fusion au moins égale à 130°C et, de préférence, au moins égale à 150°C et plus particulièrement encore à 165°C. A titre d'exemples de comonomères fluorés utilisables, on peut mentionner l'hexafluoropropylène et le chlorotrifluoréthylène.

Les polymères du fluorure de vinylidène des compositions selon l'invention sont choisis avantageusement parmi les homopolymères du fluorure de vinylidène et ses copolymères thermoplastiques avec l'hexafluoropropylène ou le chlorotrifluoréthylène, et plus particulièrement avec le chlorotrifluoréthylène. Les copolymères thermoplastiques de fluorure de vinylidène et d'hexafluoropropylène contiennent avantageusement de 5 à 20% en poids environ d'hexafluoropropylène et, plus particulièrement encore, de 8 à 15% en poids environ. Ces derniers copolymères particulièrement préférés présentent des températures de fusion d'environ 160 à environ 135°C.

Les copolymères thermoplastiques de fluorure de vinylidène et de chlorotrifluoréthylène contiennent avantageusement de 10 à 25% en poids environ de chlorotrifluoréthylène et plus particulièrement encore de 12 à 22% en poids environ. Ces derniers copolymères particulièrement préférés présentent des températures de fusion d'environ 170 à environ 165°C.

Les polymères du fluorure de vinylidène entrant dans les compositions selon l'invention peuvent être constitués indifféremment de polymères vierges ou de polymères usagés (ou encore de mélanges de ces polymères). Dans le cas où il s'agit de polymères vierges, ceux-ci se présentent le plus souvent à l'état de poudres dont les particules présentent un diamètre moyen d'environ 50 à 200 µm, et le plus souvent d'environ 100 à 140 µm. Dans le cas où il s'agit de polymères usagés, il convient bien entendu, préalablement à l'incorporation du carboxylate de bismuth, de broyer et/ou microniser les articles façonnés en polymères du fluorure de vinylidène usagés, en vue de les réduire en particules broyées (broyats) de dimension réduite. Les broyats de polymères usagés ont, de préférence, un diamètre moyen ne dépassant pas 5mm et plus particulièrement encore 2mm.

De même, dans le cas de la stabilisation thermique de polymères usagés et thermiquement dégradés, il peut être avantageux, quoique cela ne soit pas indispensable, de soumettre les broyats à un prétraitement au moyen d'eau oxygénée. Dans ce cas, on fait précéder l'incorporation de carboxylate de bismuth d'un traitement des broyats au moyen d'eau oxygénée. Ledit traitement a lieu avantageusement sous agitation dans une solution aqueuse d'eau oxygénée, par exemple à 35%, pendant quelques dizaines de minutes à quelques heures, avantageusement pendant environ 2 heures, à une température allant d'environ 80 à 100°C. Après le traitement à l'eau oxygénée, le polymère du fluorure de vinylidène est filtré, lavé à l'eau et ensuite séché.

La préparation des compositions selon l'invention ne présente pas de problème particulier. Toutes les techniques usuelles permettant d'incorporer des ingrédients de mise en oeuvre dans des polymères thermoplastiques pour former des mélanges, se présentant à l'état de poudres ou de granules, peuvent être utilisées. Ainsi, on peut mélanger le carboxylate de bismuth avec le polymère du fluorure de vinylidène dès le stade de la polymérisation, soit par introduction directe dans le milieu de polymérisation, en fin de polymérisation, soit encore par addition au gâteau humide obtenu par essorage ou filtration de la dispersion aqueuse venant de polymérisation. Il est entendu que ce mode d'incorporation n'est adapté qu'aux compositions selon l'invention constituées de polymère du fluorure de vinylidène vierge. Un mode opératoire avantageux, utilisable dans tous les cas, consiste à ajouter le carboxylate de bismuth au polymère se trouvant sous la forme d'une poudre (ou d'un broyat) lors de la fabrication d'un prémélange (premix), en même temps que les autres additifs entrant dans la composition. On peut aussi introduire le carboxylate de bismuth directement dans les appareils où le polymère de fluorure de vinylidène est fondu tels que les extrudeuses à vis. Dans ce cas, la composition stabilisée se présentera sous la forme de granules (compounds).

Les carboxylates de bismuth mis en oeuvre dans les compositions selon l'invention sont d'une efficacité telle qu'ils conviennent non seulement pour la fabrication de pièces très épaisses, telles que des plaques ou des barreaux, et pour la mise en oeuvre de polymères du fluorure de vinylidène à très hauts poids moléculaires et/ou de copolymères du fluorure de vinylidène de stabilité thermique moins élevée que celle des homopolymères, mais également pour la stabilisation-décoloration de polymères du fluorure de vinylidène usagés et thermiquement dégradés rendant possible le recyclage de broyats d'articles usagés.

Les compositions selon l'invention sont aptes à être mises en oeuvre par toutes les techniques classiques de transformation des matières thermoplastiques en fondu, telles que l'extrusion et le moulage.

Les exemples qui suivent sont destinés à illustrer l'invention.

Les exemples 1 à 4 se rapportent à des compositions de polymères du fluorure de vinylidène vierges.

Les exemples 5 à 11 se rapportent à des compositions de polymères du fluorure de vinylidène usagés et thermiquement dégradés.
Les carboxylates de bismuth mis en oeuvre dans les compositions se présentent en particules de diamètre moyen < à 30 µm.

### Exemples 1 à 4

Dans l'exemple 1 (donné à titre comparatif) et dans l'exemple 2 (selon l'invention), on a préparé des compositions de copolymère de fluorure de vinylidène et de chlorotrifluoréthylène contenant 15 % en poids de chlorotrifluoréthylène (VF2-CTFE) ayant une température de fusion de 169°C et dont l'indice de fusion, mesuré à 230°C sous une charge de 5 kg (MI) s'élève à 15 g/10min (ASTM D 1238). Ces compositions contiennent les ingrédients suivants, toutes les parties étant exprimées en poids:

| Ingrédients | Quantité |
|---|---|
| VF2-CTFE | 100 |
| molybdate de Ca (agent fumicide) | 0,3 |
| cire de polyéthylène (lubrifiant) | 0,2 |
| CaCO3 précipité | 0,1 |

La composition selon l'exemple 2 contient, en outre, 1 partie en poids de succinate de bismuth.

Ces compositions ont été malaxées dans un malaxeur de type BRABENDER à 270°C avec une vitesse des cames de 50 t/min et des crêpes ont été prélevés toutes les cinq minutes en vue d'apprécier leur coloration.

Après 5 minutes de malaxage, les compositions selon les exemples 1 et 2 sont toujours blanches.

Après 25 minutes de malaxage, la composition selon l'exemple 1 (exempte de succinate de bismuth) est brune; après 30 minutes elle est noire.

Après 25 minutes de malaxage, la composition selon l'exemple 2 est toujours blanche, après 30 minutes, elle est beige clair et après 50 minutes, elle est toujours beige.

La comparaison des résultats des exemples 1 et 2 montre l'effet stabilisant thermique exceptionnel du succinate de bismuth.

Dans l'exemple 3 (comparatif) et dans l'exemple 4 (selon l'invention), on on a préparé des compositions contenant un homopolymère du fluorure de vinylidène (PVDF) à haut poids moléculaire (MI: 0,2g/10min) et un copolymère VF2-CTFE identique à celui mis en oeuvre dans les exemples 1 et 2. Ces compositions contiennent les ingrédients suivants, toutes les parties étant exprimées en poids:

| Ingrédients | Quantité |
|---|---|
| PVDF | 67 |
| VF2-CTFE | 33 |
| cire de polyéthylène | 0,067 |

La composition selon l'exemple 4 contient, en outre, 1 partie en poids de succinate de bismuth.

Ces compositions ont été malaxées à 270°C dans les mêmes conditions que dans les exemples 1 et 2 et des crêpes prélevés en vue d'apprécier la coloration.

Après 10 minutes, la compostion selon l'exemple 3 est brune, après 20 minutes elle est noirâtre.

La composition selon l'exemple 4 est toujours blanchâtre après 15 minutes; elle est très légérement colorée (beige très clair) après 20 minutes et devient brunâtre après 50 minutes (coloris pratiquement identique à celui atteint par la composition selon l'exemple 3 après 10 minutes).

La comparaison des résultats des exemples 3 et 4 montre à suffisance l'efficacité du succinate de bismuth.

### Exemples 5 à 11

Dans les exemples 5 à 11, on a préparé des compositions à partir de PVDF homopolymère usagé et thermiquement dégradé provenant de tuyaux usagés (plusieurs années d'usage courant) de génie chimique. Les tuyaux récupérés ont été broyés de manière à obtenir des broyats dont les particules présentent un diamètre moyen < à 2mm.

Dans tous ces exemples, excepté dans l'exemple 5, donné à titre comparatif, on a incorporé 1 partie en poids de carboxylate de bismuth (dont la nature est précisée dans le tableau I en annexe).

Dans une première étape, on a mélangé les broyats de PVDF et de carboxylate de bismuth sous agitation pendant 15 minutes (agitateur planétaire tournant à 20t/min). Ces prémélanges ont ensuite été malaxés pendant 3 minutes à 180°C dans un malaxeur (de type BRABENDER) pourvu de pales tournant à 32 t/min. Les crêpes ainsi obtenus ont enfin été pressés à 210°C pendant 5 minutes dans un moule maintenu sous une pression de 50 bars. Les plaques pressées ont été ensuite examinées. Le tableau I en annexe reprend les colorations observées.

De la comparaison des résultats figurant au tableau I en annexe, il appert que le succinate, l'acrylate et le téréphtalate de bismuth apportent une décoloration très appréciable du PVDF dégradé thermiquement (cf exemple 5 donné à titre comparatif), ce qui traduit une amélioration appréciable de sa stabilité thermique.

Les carboxylates de bismuth mis en oeuvre dans les exemples comparatifs (exemples 9, 10 et 11) sont nettement moins efficaces. A cet égard, il est intéressant de comparer les résultats du maléate (dicarboxylate insaturé en C4) ou encore de l'oxalate (dicarboxylate saturé en C2) avec ceux du succinate (dicarboxylate saturé en C4).

**TABLEAU**

| N° de l'ex. | Carboxylate de Bi | Coloration de la plaque pressée |
|---|---|---|
| 5 (C) | néant | brun-noir |
| 6 | succinate | blanc-beige |
| 7 | acrylate | beige clair |
| 8 | téréphtalate | beige clair |
| 9 (C) | maléate | beige foncé-brun |
| 10 (C) | oxalate | beige foncé-brun |
| 11 (C) | formiate | beige foncé-brun |

## Revendications

1. Compositions de polymères du fluorure de vinylidène stabilisés à la chaleur à l'intervention d'une quantité efficace de carboxylate de bismuth, caractérisées en ce que le carboxylate de bismuth est choisi parmi le succinate, l'acrylate et le téréphtalate de bismuth et leurs mélanges.

2. Compositions de polymères du fluorure de vinylidène selon la revendication 1, caractérisées en ce que le carboxylate de bismuth est choisi parmi le succinate et l'acrylate de bismuth et leurs mélanges.

3. Compositions de polymères du fluorure de vinylidène selon la revendication 2, caractérisées en ce que le carboxylate de bismuth est du succinate de bismuth.

4. Compositions de polymères du fluorure de vinylidène selon les revendications 1 à 3, caractérisées en ce que le carboxylate de bismuth est présent à raison d'au moins 0,05 partie en poids pour 100 parties en poids de polymère du fluorure de vinylidène.

5. Compositions de polymères du fluorure de vinylidène selon les revendications 1 à 4, caractérisées en ce que la teneur en carboxylate de bismuth ne dépasse pas 5 parties en poids pour 100 parties en poids de polymère du fluorure de vinylidène.

6. Compositions de polymères du fluorure de vinylidène selon les revendications 1 à 5, caractérisées en ce que le carboxylate de bismuth est présent à l'état d'une poudre dont les particules présentent un diamètre moyen compris entre 0,1 et 30 µm.

7. Compositions de polymères du fluorure de vinylidène selon les revendications 1 à 6, caractérisées en ce que les polymères du fluorure de vinylidène sont choisis parmi les homopolymères du fluorure de vinylidène et ses copolymères thermoplastiques avec l'hexafluoropropylène ou le chlorotrifluoréthylène.

8. Compositions de polymères du fluorure de vinylidène selon les revendications 1 à 7, caractérisées en ce que les polymères du fluorure de vinylidène sont constitués de polymères vierges.

9. Compositions de polymères du fluorure de vinylidène selon les revendications 1 à 7, caractérisées en ce que les polymères du fluorure de vinylidène sont constitués de polymères usagés se présentant à l'état de broyats d'articles façonnés.

10. Compositions de polymères du fluorure de vinylidène selon la revendication 9, caractérisées en ce que les broyats sont soumis à un prétraitement au moyen d'eau oxygénée.

## Patentansprüche

1. Zusammensetzungen von Vinylidenfluorid-Polymeren, die unter Beteiligung einer wirksamen Menge an Bismutcarboxylat wärmestabilisiert sind, dadurch gekennzeichnet, daß das Bismutcarboxylat unter dem Bismutsuccinat, -acrylat und -terephthalat und deren Gemischen ausgewählt ist.

2. Zusammensetzungen von Vinylidenfluorid-Polymeren gemäß Anspruch 1, dadurch gekennzeichnet, daß das Bismutcarboxylat unter dem Bismutsuccinat und -acrylat und deren Gemischen ausgewählt ist.

3. Zusammensetzungen von Vinylidenfluorid-Polymeren gemäß Anspruch 2, dadurch gekennzeichnet, daß das Bismutcarboxylat Bismutsuccinat ist.

4. Zusammensetzungen von Vinylidenfluorid-Polymeren gemäß den Ansprüchen 1 bis 3, dadurch gekennzeichnet, daß das Bismutcarboxylat in einer Menge von wenigstens 0,05 Gewichtsteil auf 100 Gewichtsteile Vinylidenfluorid-Polymer vorhanden ist.

5. Zusammensetzungen von Vinylidenfluorid-Polymeren gemäß den Ansprüchen 1 bis 4, dadurch gekennzeichnet, daß der Gehalt an Bismutcarboxylat 5 Gewichtsteile auf 100 Gewichtsteile Vinylidenfluorid-Polymer nicht überschreitet.

6. Zusammensetzungen von Vinylidenfluorid-Polymeren gemäß den Ansprüchen 1 bis 5, dadurch gekennzeichnet, daß das Bismutcarboxylat im Zustand eines Pulvers vorliegt, dessen Teilchen einen mittleren Durchmesser zwischen 0,1 und 30 µm aufweisen.

7. Zusammensetzungen von Vinylidenfluorid-Polymeren gemäß den Ansprüchen 1 bis 6, dadurch gekennzeichnet, daß die Vinylidenfluorid-Polymere unter den Homopolymeren von Vinylidenfluorid und seinen thermoplastischen Copolymeren mit Hexafluorpropylen oder Chlortrifluorethylen ausgewählt sind.

8. Zusammensetzungen von Vinylidenfluorid-Polymeren gemäß den Ansprüchen 1 bis 7, dadurch gekennzeichnet, daß die Vinylidenfluorid-Polymere aus ungebrauchten Polymeren bestehen.

9. Zusammensetzungen von Vinylidenfluorid-Polymeren gemäß den Ansprüchen 1 bis 7. dadurch gekennzeichnet, daß die Vinylidenfluorid-Polymere aus gebrauchten Polymeren bestehen, die im Zustand von Mahlgut von Formgegenständen vorliegen.

10. Zusammensetzungen von Vinylidenfluorid-Polymeren gemäß Anspruch 9, dadurch gekennzeichnet, daß das Mahlgut einer Vorbehandlung mittels Wasserstoffperoxid unterzogen wird.

## Claims

1. Compositions containing vinylidene fluoride polymers which are stabilized to heat by the involvement of an effective amount of bismuth carboxylate, characterized in that the bismuth carboxylate is chosen from bismuth succinate, acrylate and terephthalate and their mixtures.

2. Compositions containing vinylidene fluoride polymers according to Claim 1, characterized in that the bismuth carboxylate is chosen from bismuth succinate and acrylate and their mixtures.

3. Compositions containing vinylidene fluoride polymers according to Claim 2, characterized in that the bismuth carboxylate is bismuth succinate.

4. Compositions containing vinylidene fluoride polymers according to Claims 1 to 3, characterized in that the bismuth carboxylate is present in the proportion of at least 0.05 part by weight per 100 parts by weight of vinylidene fluoride polymer.

5. Compositions containing vinylidene fluoride polymers according to Claims 1 to 4, characterized in that the bismuth carboxylate content does not exceed 5 parts by weight per 100 parts by weight of vinylidene fluoride polymer.

6. Compositions containing vinylidene fluoride polymers according to Claims 1 to 5, characterized in that the bismuth carboxylate is present in the form of a powder, the particles of which exhibit a mean diameter of between 0.1 and 30 µm.

7. Compositions containing vinylidene fluoride polymers according to Claims 1 to 6, characterized in that the vinylidene fluoride polymers are chosen from vinylidene fluoride homopolymers and its thermoplastic copolymers with hexafluoropropylene or chlorotrifluoroethylene.

8. Compositions containing vinylidene fluoride polymers according to Claims 1 to 7, characterized in that the vinylidene fluoride polymers are composed of virgin polymers.

9. Compositions containing vinylidene fluoride polymers according to Claims 1 to 7, characterized in that the vinylidene fluoride polymers are composed of waste polymers which are provided in the form of ground materials from shaped articles.

10. Compositions containing vinylidene fluoride polymers according to Claim 9, characterized in that the ground materials are subjected to a pretreatment by means of hydrogen peroxide.
